# EUROPÄISCHE PATENTANMELDUNG

(11) **EP 2 672 187 A1**
(43) Veröffentlichungstag der Anmeldung: **11.12.2013**
(21) Anmeldenummer: 13001304.8
(22) Anmeldetag: 14.03.2013
(51) Int. Cl.: F24D 3/14, A47K 3/16, A47K 3/40, F24H 1/00, E04B 5/48, E04C 2/52

(54) **Beheizter Duschboden**

(30) Priorität: 05.06.2012 DE 102012011016
(71) Anmelder: Jackon Insulation GmbH, 39619 Arendsee (DE)
(72) Erfinder: Gerke, Heiko, 29410 Salzwedel OT Hestedt (DE); Sandmann, Dirk, 33613 Bielefeld (DE)
(74) Vertreter: Kaewert, Klaus

(57) **Zusammenfassung**

Nach der Erfindung werden für Duschbodenheizungen Kunststoffschaumplatten verwendet, welche mit eingelegter Heizschlange und einer Mörtelbeschichtung versehen sind.

## Beschreibung

Die Erfindung betrifft einen beheizbaren Duschboden.

Die elektrische Beheizung von Duschböden ist bekannt. Wegen der Einzelheiten wird Bezug genommen auf die DE202007011908, DE202004007614.

Die elektrische Beheizung ist im Vergleich zu einer herkömmlichen Warmwasserheizung mit fossilen Energieträgern ökonomisch von Nachteil, wenn Strom zunächst durch Verbrennung fossiler Energieträger erzeugt werden muß. Dann multiplizieren sich die Wirkungsgradverluste aus der Stromerzeugung mit den Wirkungsgradverlusten aus dem Transport und der Umwandlung von Strom in Wärme.

Warmwasserbodenheizungen sind in großer Vielzahl handelsüblich und in Gebrauch. Dabei werden unter Heizungsrohre oder Heizungsschläuche unter einem Estrich verlegt. Die Heizungsrohre und Heizungsschläuche bestehen zumeist aus Kunststoff. Bevorzugter Kunststoff ist dabei Polyethylen.

Die Rohre und Schläuche werden überwiegend schlangenförmig (mäandernd) oder spiralförmig (schneckenförmig) verlegt. Bei der spiralförmigen Verlegung hat sich als vorteilhaft erwiesen, zwei Rohre/Schläuche mit Vorlauf in dem einen Rohr/Schlauch und Rücklauf in dem anderen Rohr/Schlauch gemeinsam in einer Spiralform verlegt. Auf dem Wege wird eine besonders gleichmäßige Beheizung erreicht. Die Rohrabstände/Schlauchabstände in einer Heizschlange oder einer Heizspirale liegen üblicherweise zwischen 15 bis 30cm. Auch kleinere Abstände sind bekannt. Die Rohrdurchmesser/Schlauchdurchmesser betragen zumeist außen 14 bis 17 mm. Auch größere und kleinere Durchmesser sind bekannt.

Die Vorlauftemperatur des Heizwasser beträgt üblicherweise 35 bis 55 Grad Celsius. Die Rücklauftemperatur ist zumeist etwa 5 Grad Celsius geringer als die Vorlauftemperatur. Fußbodenheizungen sind nach DIN EN 1264 genormt. Zu weiteren Einzelheiten zu Fußbodenheizungen wird Bezug genommen auf folgende Druckschriften 202011108342, DE202011102949, DE De202010017728, DE202010016275, DE202010007110, DE202009016744, DE202008003623, DE202007018925, DE202007016412, DE202006020689, DE202005004162DE202004004715, DE102010060717, DE102010053897.

Trotz des Bekanntheitsgrades der Fußbodenheizungen sind Warmwasserbodenheizung in Duschen ungebräuchlich. Die Erfindung führt das auf sowohl auf die Schwierigkeit zurück, die einer solchen Anwendung der Warmwasserheizungen entgegensteht als auch darauf, daß zu einer Bodenheizung immer eine attraktive Alternative besteht, nämlich die Wandheizkörper, die zugleich als Handtuchhalter ausgebildet sind.

Aus der Tatsache, daß immer mehr Wandheizkörper von Bodenheizungen verdrängt werden, läßt sich ableiten, daß gleichwohl in Duschen ein erheblicher Bedarf nach Bodenheizungen besteht. Das erklärt sich mit der besonderen Anmutung eines warmen Duschbodens.

Die Erfindung hat sich deshalb die Aufgabe gestellt, eine Bodenheizung mit Warmwasser in Duschen zu verwirklichen.

Üblicherweise werden die Heizungen mit Wasser betrieben. Es sind aber auch andere flüssige Heizungsmittel denkbar, auch in Mischung mit Wasser. Zu den Heizungen gehören Heizkörper(Wärmetauscher), in denen anströmendes Warmwasser gekühlt wird, um die durch die Kühlung aufgenommene Wärme weitgehend an einen Gebäuderaum abzugeben.

Das Warmwasser wird in einem Warmwasserbereiter (Heizkessel, Therme) erzeugt und über eine Leitung zu dem Wärmetauscher/Heizkörper geführt.

Das abgekühlte Wasser wird über eine Leitung zu dem Warmwasserbereiter zurückgeführt. Der Wasserumlauf kann zwangsweise mittels einer Pumpe oder im Naturumlauf erfolgen. Beim Naturumlauf wird darauf vertraut, daß das kalte Wasser aufgrund seines größeren spezifischen Gewichtes nach unten sinkt und zum Warmwasserbereiter zurückströmt, während das Warmwasser aufgrund seines geringeren spezifischen Gewichtes aufsteigt und zu dem Wärmetauscher strömt. Der Naturumlauf kann jedoch durch Vieles gestört werden. Deshalb wird in den allermeisten Fällen der Zwangsumlauf angewendet.

In den Wasserkreislauf sind üblicherweise mehrere Heizkörper als sogenannte Verbraucher eingebunden. Die einzelnen Heizkörper werden über Zuflußventile gesteuert. Zeitgemäße Ventile sind als Thermostatventile ausgebildet. Die Thermostatventile beinhalten eine Temperaturregelung für das Ventil. Das Ventil öffnet weiter, wenn die eingestellte Raumtemperatur unterschritten wird, und schließt etwas, wenn die eingestellte Raumtemperatur überschritten wird. Üblicherweise ist noch eine zusätzliche Steuerung des Warmwassererzeugers vorgesehen, mit der der Warmwasserzeuger in Gang gesetzt wird, wenn eine bestimmte Wassertemperatur unterschritten wird, bzw. den Warmwassererzeuger abschaltet, wenn eine bestimmte Wassertemperatur überschritten wird. Nach Belieben können für die Steuerung des Warmwassererzeugers auch noch eine Raumtemperatur an besonders repräsentativer Stelle im Raum und eine Außentemperatur an besonders repräsentativer Außenstelle herangezogen werden.

Üblicherweise gehört auch ein Ausgleichsgefäß zu dem Heizkreis. Das Ausgleichsgefäß nimmt Überschußwasser aus dem Heizkreis auf, welches durch Wassererwärmung anfällt, bzw. drückt fehlendes Wasser in den Heizkreis, wenn das Wasser sich aufgrund von Abkühlung wieder zusammen zieht.

Seit Jahren gewinnen Fußbodenheizungen an Bedeutung, die durch Heizschlangen bzw. Heizspiralen gebildet werden, welche im Fußbodenbau unterhalb des Estrichs oder im Estrich angeordnet sind.

Solche Heizschlangen sind im weitesten Sinne auch Heizkörper bzw. Verbraucher. Die Heizschlagen werden dabei regelmäßig an einem Ende an eine gemeinsame Warmwasser-Zuführungsleitung(Vorlaufleitung) angeschlossen. Das andere Ende wird an eine gemeinsame Kaltwasser-Abführungsleitung (Rücklaufleitung) angeschlossen.

Die zeitgemäßen Heizschlangen/Heizspiralen bestehen aus Kupfer und/oder Kunststoff.

Bei Heizschlangen aus Kupfer und aus Kunststoff wird von einem Verbundwerkstoff gesprochen. Die Heizschlangen/Heizspiralen aus Kupferrohr wurden früher regelmäßig mit den Muffen und Fittingen verlötet bzw. über die Muffen und Fittinge mit den Leitungen für den Vorlauf und Rücklauf verlötet. Lötverbindungen sind noch heute üblich. Darüber hinaus gibt es Preßverbindungen, Steckverbindungen, Klemmringverbindungen, Schneidringverbindungen. Es sind auch Quetschverbindungen bekannt.

Üblicherweise ist unterhalb der Heizschlangen eine Wärmeisolierung vorgesehen. Als Wärmeisolierung werden zumeist Platten aus Kunststoffschaum verwendet. Das heißt, die Wärmeisolierung wird aus Kunststoffschaumplatten zusammen gesetzt. Für die Kunststoffschaumplatten haben sich verschiedene Kunststoffe durchgesetzt. Zu diesen Kunststoffen gehört auch Polystyrol.

Die Platten können aus extrudiertem Kunststoffschaum bestehen oder aus Schaumpartikeln zusammengesetzt sein. Die Schaumpartikel werden zumeist in großen Mengen im Autoklaven von Spezialunternehmen hergestellt und anschließend zu Verarbeitern transportiert, wo die Schaumpartikel in Formen mit Heißdampf bedampft werden, so daß die Partikel an der Oberfläche anschmelzen und zu einem gewünschten Formteil miteinander verbunden werden.

Die durch Extrudieren hergestellten Platten werden für die Dämmung von Duschböden konfektioniert. Vorzugsweise durch zerspanende Bearbeitung wird den Platten an der Oberfläche eine Neigung/Ablaufschräge gegeben, an der das Duschwasser abfließen kann. Bekannte Neigungen liegen bei 1 bis 3%.

Am Tiefsten der Ablaufschräge ist eine Ablauföffnung oder Ablaufrinne vorgesehen. Zu der Ablauföffnung gehören eine Abdeckung, ein Geruchsverschluß und eine Abwasserleitung. Die Abwasserleitung führt zu einer Abwasser-Sammlerleitung. Die Abwasser-Sammlerleitung endet im Abwasserkanal. Der Geruchsverschluß verhindert, daß unangenehme Abwassergerüche aus der Ablauföffnung oder aus der Ablaufrinne austreten. Der Geruchsverschluß wird in der Regel durch ein Syphon gebildet. Die Abdeckung hat die Aufgabe, eine dichte Verbindung mit der Ablaufleitung herzustellen.

Die Kunststoffschaumplatten werden oben mit einer Beschichtung versehen. Die Beschichtung kann zum Beispiel eine Kunststoffschicht sein.

Die Beschichtung kann auch durch Fliesen gebildet werden. Desgleichen können die Fliesen und Kunststoffschichten miteinander kombiniert werden.

In allen herkömmlichen Fällen ist kein Raum für eine Heizschlange gegeben. Nach der Erfindung wird gleichwohl mit den Merkmalen des Hauptanspruches eine Bodenheizung mittels einer Heizschlange/Heizspirale bei Duschen erreicht. Bevorzugte Ausführungsformen sind in den Unteransprüchen beschrieben.

Hervorzuheben ist dabei, daß Kunststoffschaumplatten Anwendung finden und die Rohre/Schläuche der Heizschlangen/Spiralen in die Schaumplatten eingelassen sind und die Kunststoffschaumplatten beiderseits unter Einschluß der Rohre/Schläuche mit Mörtel beschichtet sind, so daß die Duschböden unmittelbar gefliest werden können. Zugleich sind die Kunststoffschaumplatten mit einer Heizschlange/Heizspirale und mit Anschlüsse für die Verbindung mit der Heizvorrichtung versehen.

Die Heizschlangen/Heizspiralen können Rohrschlangen/Spiralen oder Schlauchschlangen/Spiralen sein.

Die Kunststoffschaumplatten werden mit den Heizschlangen/Spiralen werkseitig vorbereitet und zumindest teilfertig (Platte und Heizschlange/Spirale) an die Baustelle geliefert. Dabei umfaßt der Begriff der Heizschlangen/Spiralen sowohl hin- und hergehend geführte Rohr/Schlauchsysteme als auch spiralförmig verlaufende Rohr/Schlauchsysteme als auch Rohr/Schlauchsysteme mit Rohr/Schlauchringen unterschiedlichen Durchmessers, von denen die Rohr/Schlauchringe größeren Durchmessers die Ringe mit kleinerem Durchmesser umgeben. Die Rohrsystem können einheitliche oder unterschiedliche Krümmungen, einschließlich gerade verlaufenden Rohre/Schläuche aufweisen.

Die Kunststoffschaumplatten und Heizschlangen können werksseitig vorbereitet werden. Das heißt, sie können werksseitig miteinander verbunden werden. Auf dem Wege entstehen werksseitige vorbereitete Heizungsmodule mit einem viel höheren Qualitätsstandard als ausschließlich auf der Baustelle hergestellte Heizungssysteme. Hinzu kommt ein erheblicher Rationalisierungsvorteil bei einer werksseitigen Vorbereitung.

Vorteilhafterweise haben die Rohr/Schlauchleitungen bei einer Anordnung des Wasserablaufes in der Bodenmitte oder an einer ähnlichen Stelle mindestens im Bereich des Wasserablaufes einen Abstand, der größer als der Platzbedarf des Wasserablaufes ist, so daß der Wasserablauf in dem Bereich zwischen den Windungen der Heizungsschlange Platz findet. Entsprechendes gilt, wenn eine Ablaufrinne in der Bodenmitte oder an einer ähnlichen Stelle vorgesehen ist. Wenn der Ablauf dagegen am Duschrand vorgesehen ist, so ist nach der Erfindung wahlweise vorgesehen, daß die Heizschlange vor dem Ablauf endet oder um den Ablauf herumgeführt wird. Entsprechendes gilt für eine Ablaufrinne.

Die Duschböden können in weiten Grenzen in jeder gewünschten Größenordnung angefertigt werden. Kleinere Böden können aus größerem Kunststoffschaum-Ausgangsmaterial gefertigt werden. Größere Böden können aus verschiedenen Kunststoffschaumplatten zusammen gesetzt werden. Vorzugsweise haben die Heizungsmodule jedoch eine Breite ab 400 mm und eine Länge von 1000mm (kleine Platten) oder eine Breite von 600 mm und eine Länge bis 3000 mm (große Platten). Zwischengrößen können sein:
600 x 1200mm
600 x 1300mm
600 x 2000mm
600 x 2600mm

Die eckige Form der Heizungsmodule erleichtert die Planung und Ausführung des beheizten Duschbodens sowie weitere Gewerke, die vor und nach der Montage der Heizung in deren Bereich zu erstellen sind.

Die vorstehenden Plattenbreiten erlauben verschiedene Variationen. Zum Beispiel können große Platten gleichgerichtet nebeneinander gelegt werden oder gleichgerichtet und quer zueinander nebeneinander gelegt werden. Das gleiche gilt für kleine Platten und Zwischengrößen.

Darüber hinaus können verschiedene Platten beliebig miteinander kombiniert werden.

Vorzugsweise werden die HeizschlangenSpiralen in Einformungen der Kunststoffschaumplatte verlegt/versenkt. Die Einformungen sichern eine genaue

Verlegung der Heizschlangen/Spiralen, ohne daß dazu Hilfsmittel verwendet werden müssen. Die Einformungen bilden ein Spiegelbild der vorgesehenen Heizschlangen/Spiralen. In dem Sinne umgeben die Einformungen den Wasserablauf oder eine Ablaufrinne bzw. enden die Einformungen vor dem Ablauf oder der Ablaufrinne.

Günstig ist, wenn die Einformungen so tief sind, daß die Rohre/Schläuche der Heizschlangen vollständig aufgenommen werden und mit einer armierten Mörtelschicht überdeckt werden können.

Vorzugsweise sind Kunststoffschaumplatten an den gegenüberliegenden Flachseiten mit einem armierten Mörtel beschichtet.

Die armierte Mörtelschicht bewirkt eine beidseitige Einspannung der Kunststoffschaumplatte. Die Einspannung wirkt einer Schüsselung der Kunststoffschaumplatte entgegen.

Die erfindungsgemäße Ausbildung vereinfacht die Verlegung der Kunststoffschaumplatten am Boden und an der Wand.

Als Armierung eignet sich besonders ein Glasfasergittergewebe. Im Gitter finden sich Fasern, welche in Längsrichtung der Platten verlaufen, und Gitter, welche quer zur Längsrichtung der Platten verlaufen. Als Mörtel eignet sich besonders eine Mischung aus mineralischem Baustoff und Kunststoffkleber. Mit dem Kunststoffkleber läßt sich eine vorteilhafte Verbindung zu der Kunststoffschaumplatte herstellen.

Die Mörtelschicht gibt den Kunststoffschaumplatten mit den eingeschlossenen Heizschlangen/Spiralen eine hohe Festigkeit. Überraschenderweise zeigt sich dabei, daß die Mörtelschicht den Wärmefluß in der gewünschten Richtung verbessert. Das heißt, die Heizung wird verbessert.

Vorzugsweise sind die Einformungen so tief, daß die Rohre/Schläuche der Heizschlange noch einen Abstand von der Schaumoberfläche der Platte aufweisen, der vorzugsweise mindestens 1 mm beträgt, noch weiter bevorzugt mindestens 2mm beträgt und höchst bevorzugt mindestens 3mm beträgt. Der dadurch entstehende Raum oberhalb der Rohre/Schläuche der Heizschlange wird vorzugsweise Mörtel verfüllt. Dieser zusätzliche Mörtel verbessert den Wärmeübergang noch weiter. Es ist günstig, für den zusätzlichen Mörtel den gleichen Mörtel zu verwenden, wie er für die außen liegende armierte Mörtelschicht verwendet wird. Dann kann die Verfüllung der Einformung mit dem Aufbringen der armierten Mörtelschicht zusammen erfolgen. Dabei kann zunächst eine Verfüllung des Raumes über den Rohren/Schläuche erfolgen, bevor der Mörtel für die armierte Mörtelschicht aufgetragen wird. Es kann auch die Verfüllung des Raumes über den Rohren zeitgleich mit der Aufbringung des Mörtels für die armierte Mörtelschicht erfolgen.

Die Armierung für die Mörtelschicht kann ihrerseits zeitgleich mit der Aufbringung der Mörtelschicht verlegt werden oder anschließend in die noch frische Mörtelschicht eingedrückt werden.

Wahlweise kann die Einformung in die Kunststofschaumplatte U-förmig gestaltet sein. Die Einformung kann auch V-förmig oder in anderer Form erweiternd gestaltet sein, so daß unter der armierten Mörtelschicht eine sich erweiternde Mörtelschicht befindet und der Wärmefluß noch weiter verbessert wird.

Wahlweise sind die Einformungen auch so groß gewählt, daß die Rohre/Schläuche der Heizschlangen umfassend von einer Mörtelschicht umgeben sind. Vorzugsweise ist das zur Heizschlange/Spirale gehörige Rohr oder Schlauch am Umfang mindestens hälftig, noch weiter bevorzugt zu ¾ und höchst bevorzugt voll umfänglich mit Mörtel umgeben.

Das verbessert die Verbindung zwischen Rohr/Schlauch und Kunststoffschaum und verstärkt die Platte. Hinzu kommt eine Steigerung des Wärmeflusses.

Vorzugsweise ist die dadurch entstehende Mörtelummantelung der Rohre/Schläuche kleiner oder gleich dem Abstand des Rohres von der außen die Einformung überspannenden, armierten Mörtelschicht.

Zum Anschluß an benachbarte Heizungsmodule für einen Duschboden und/oder an einen Heizkreis der Heizanlage können die Heizschlange/Spirale mit Verbindungsstücken versehen sein. Anschlußstellen an dem Heizkreis befinden sich in der Vorlaufleitung bzw. in der Rücklaufleitung. Günstig ist es, wenn die Anschlüsse in einer Anschlußstation zusammen gefaßt sind. Weil in der Anschlußstation eine Verteilung der vorlaufenden Heizmittel auf die Verbraucher stattfindet bzw. die von den Verbrauchern rücklaufenden Heizmittel zusammengefaßt werden, wird die Anschlußstation auch als Verteilerblock bezeichnet. Vorzugsweise sind in der Anschlußstation/Verteilerblock zugleich Ventile vorgesehen, mit denen die Heizmittelströme zu den verschiedenen Verbrauchern eingestellt werden können. Wahlweise kann mit Hilfe dieser Ventile zugleich eine Regelung erfolgen. Geeignete Ventile sind dann motorisch verstellbar, wobei die Verstellung elektrisch/elektronische gesteuert wird und als Steuerung eine oder mehrere Temperaturmeßeinrichtungen und eine Datenverarbeitungseinrichtung dient, welche anhand der gemessen Temperaturen die Heizung betätigt oder abschaltet.

Die Anschlußstücke werden insbesondere durch Muffen/T-Stücke und Eckstücke gebildet. Wie an anderer Stelle ausgeführt, können die Verbindungen als Steckverbindungen, Schraubverbindungen oder Lötverbindungen oder als andere Verbindungen ausgebildet sein.

Die Rohre/Schläuche einer Heizschlange/Spirale können mit ihren Enden aus einer erfindungsgemäßen Kunststoffschaumplatte herausragen. Das erleichtert die Verbindung. Die herausragenden Enden besitzen eine Mindestlänge von 5cm, vorzugsweise von 15cm, noch weiter bevorzugt von 25cm und höchst bevorzugt von 35cm. Insbesondere bei Heizschlangen/Spiralen aus Schlauch kann die vorragende Länge auch 1m oder mehrere Meter betragen. Selbst eine Länge von 9m kann von Vorteil sein, um größere Abstände zu den Anschlußstellen an der Vorlaufleitung/Rücklaufleitung bzw. zur Anschlußstation oder zur Heizvorrichtung zu überbrücken.

Die Enden der Heizschlange/Heizspirale verlaufen vorzugsweise gerade und senkrecht zur nächstliegenden Schmalfläche der Kunststoffschaumplatte. Für die Enden sind die gleichen Vertiefungen in der Schaumplatte vorgesehen wie im übrigen Bereich der Heizschlange/Spirale. Bei Enden der Heizschlangen/Spiralen, welche aus den Schaumplatten herausragen, findet vorzugsweise im Bereich der Schaumplatten die gleiche Mörteleinbettung wie im übrigen Bereich der Heizschlangen/Spiralen statt.

Bei den Enden der Heizschlange/Heizspirale, welche aus den Kunststoffschaumplatten herausragen, findet die Verbindung mit den Leitungen für Vorlauf bzw. Rücklauf und die Verbindung mit Anschlußstationen außerhalb der Kunststoffschaumplatte statt.

Wahlweise erfolgt die Verbindung der Enden der Rohre/Schläuche einer Heizschlange/Spirale jedoch ganz oder teilweise in der Kunststoffschaumplatte statt. Dann ragen Verbindungsstücke ganz oder teilweise in die Kunststoffschaumplatten. Für die Verbindungsstücke sind dann entsprechende Ausnehmungen in der Kunststoffschaumplatte vorgesehen.

Die Ausnehmungen können rund und eckig sein.

Ausreichende Ausnehmungen können sich schon ergeben, wenn im Bereich der Verbindungsstücke von einer Mörteleinbettung abgesehen wird. Wahlweise sind dort auch größere Ausnehmungen/Einformungen als im übrigen Bereich der Heizschlagen/Spiralen vorgesehen.

Die Verbindungsstücke können in den Ausnehmungen/Einformungen der Schaumplatte frei liegen und dort zugänglich sein.

Die Verbindungsstücke können einteilig und mehrteilig sein. Bei mehrteiliger Ausbildung ist es möglich, ein lösbares Teil des Verbindungsstücks in der Ausnehmung/Einformung der Kunststoffschaumplatte mit Mörtel oder in anderer Weise fest anzuordnen, wenn das andere Teil des Verbindungstückes mit dem fest angeordneten Verbindungsstück verbindbar ist.

Mit den Verbindungsstücken läßt sich außerdem der Abstand von den Enden der Rohre/Schläuche zu den Anschlußstellen am benachbarten Heizmodul und/oder zu den Anschlußstellen an den zugehörigen Vorlaufleitungen/Rücklaufleitungen oder zur Anschlußstation oder zur Heizvorrichtung überbrücken.

Die Ausnehmung vereinfachen die Anschlüsse aneinander liegender Heizungsmodule für Duschböden.

Wahlweise entstehen die erfindungsgemäßen Ausnehmungen jeweils an einer Ecke. Darüber hinaus kann es, insbesondere für Heizschlangen, von Vorteil sein, die Ausnehmungen an zwei gegenüberliegenden Ecken einer Kunststoffschaumplatte für den erfindungsgemäßen Heizungsmodul vorzusehen.

Für die erfindungsgemäßen Heizschlangen/Spiralen kann es von Vorteil sein, wenn die Rohre/Schläuche einen geringen Außendurchmesser von zum Beispiel 10mm für Fußbodenheizungen im Bad aufweisen. Bei fußbodenläufigen Duschen ist ein Gefälle zu berücksichtigen. Durch das Gefälle reduziert sich die für die Heizschlange/Spirale nutzbare Dicke des Bodenaufbaus der Dusche. Soweit Rohre/Schläuche mit größerem Durchmesser für Fußbodenheizungen in der Dusche Anwendung finden sollen, soll der Rohr/Schlauchdurchmesser nicht größer als 90%, noch weiter bevorzugt nicht größer als 80% und höchst bevorzugt nicht größer als 70% des Dickenmaßes der verwendeten Kunststoffschaumplatte sein.

Die für die erfindungsgemäßen Duschböden vorgesehenen Kunststoffschaumplatten besitzen vorzugsweise eine Dicke von mindestens 20mm, noch weiter bevorzugt von mindestens 30mm. Die Einformung an den Kunststoffschaumplatten hat dann eine Tiefe von vorzugsweise höchstens 15mm, noch weiter bevorzugt von höchstens 12mm. Selbst bei einer Kunststoffschaumplattendicke von 20mm besitzt der erfindungsgemäße Heizungsmodul aufgrund der erfindungsgemäßen Konstruktion des Heizungsmoduls eine hohe Steifigkeit.

Die Kunststoffschaumplatte besteht vorzugsweise aus einem extrudierten Polystyrolschaum mit einem Raumgewicht von 25 bis 35 kg pro Kubikmeter Anwendung. Wahlweise kann es sich auch um ein Formteil aus Polystyrol-Partikelschaum handeln.

Die Mörtelschicht ist vorzugweise möglichst dünn ausgebildet, so daß sich die Gitterarmierung an der Plattenoberfläche abzeichnet und der Estrich, Mörtel und Putz zusätzlich an der Oberfläche der Kunststoffschaumplatten verkrallen können. Die Mörtelschicht hat einschließlich der Armierung vorzugsweise eine Dicke von kleiner oder gleich 3mm, noch weiter bevorzugt eine Dicke von kleiner oder gleich 2mm und höchst bevorzugt eine Dicke von kleiner oder gleich 1,5mm.

Die Mörtelschicht besitzt vorzugsweise einen mineralischen Kleberanteil und einen Kunststoffkleberanteil. Der mineralische Kleberanteil gewährleistet eine gute Verbindung mit anderen mineralischen Baustoffen des Gebäudes. Der Kunststoffkleberanteil gewährleistet eine gute Verbindung mit dem Kunststoff.

Die Klebereigenschaften des verwendeten Mörtels lassen sich auch vorteilhaft für eine Verbindung mit anderen Baustoffen am Gebäude nutzen.

So kann der erfindungsgemäße Duschboden mit mineralischem Mörtel an einer mineralischen Gebäudefläche angebracht werden. Auch andere Bauteile und Baustoffe, zum Beispiel Fliesen, lassen sich mit einem mineralischen Mörtel auf einem erfindungsgemäßen Duschboden aufbringen.

Mit einem Fliesenkleber für die Anbringung von Fliesen auf den erfindungsgemäßen Duschböden können darüber hinaus weitere Vorteile entstehen, wenn der Fliesenkleber wie der oben beschriebene Mörtel sowohl einen mineralischen Anteil als auch einen Kunststoffkleberanteil enthält. Dann kann die Kombination des Fliesenkleber mit dem Mörtel zu besonderes guten Haftwerten führen.

Darüber hinaus kann sich ein Vorteil durch den Kunststoffkleberanteil im Mörtel ergeben, wenn der mineralische Anteil im Mörtel keine nennenswerte Haftung an der Berührungsfläche der Gebäudefläche oder an der Berührungsfläche anderer Bauteile entwickelt. Dann ergibt sich wenigstens mit dem Kunststoffkleberanteil eine Haftung.

Obige Vorteil lassen sich erzielen, wenn die Kunststoffschaumplatten zum Beispiel in eine frische Mörtelschicht als Verbindungsschicht auf Betonuntergrund verlegt werden.

Mit dem Kunststoffkleberanteil läßt sich darüber hinaus eine gewünschte Verbindung zum Beispiel zu Kunststoff-Folien herstellen, an denen ein rein mineralischer Mörtel nicht haftet.

Der Kunststoffkleberanteil ist vorzugsweise ein Dispersionskleber, hergestellt durch Einmischung eines Dispersionspulvers. Das Pulver besteht aus einem oder mehreren Polymeren, deren monomer ethylinische, ungesättigte Bindungen aufweisen und können Kondensationsprodukte von Melamin-Formaldehyd-Sulfonat, Naphthalin-Formaldehyd-Sulfonat oder Copolymere von Vinylpyrrolidon-Vinylacetat enthalten. Als Polymere kommen in Frage: Vinyl oder Acrylathomopolymere oder Copolymyer von Vinylacetat, Vinylestern, Alkyl(meth)acrylat, Styrol/Butadien, Styrol/Acrylat oder Styrol/Butadien /Acrylat. Zur Erhöhung der Haftung können zur Herstellung der Dispersionspulver auch oberflächenaktive Monomere in die Polymere eingearbeitet werden. Hierzu gehören: ethoxylierte Acrylate und Hydroxylgruppen treminierte, alkoxylierte Acrylate . Wegen der Einzelheiten zu Dispersionspulvern wird Bezug genommen auf die US3784648, DE3143070, EP78449, JP53126093, JP10195312, DE19644309, DE19545608, DE19825052, DE 19942301.

Die Dispersionspulvermenge in der Mischung kann zum Beispiel bis 50Gew% betragen, vorzugsweise beträgt die Dispersionspulvermenge in der Mischung vorzugsweise 1 bis 10Gew%, noch weiter bevorzugt 3 bis 5 Gew%.

In der Zeichnung sind mehrere Kunststoffschaumplatten für einen erfindungsgemäßen Duschboden dargestellt.

Mit 1 ist eine extrudierte Polystyrolschaumplatte bezeichnet. Die Qualität des Polystyrolschaumes ist durch ein Raumgewicht von 30 kg pro Kubikmeter gekennzeichnet. In die Schaumplatte 1 ist eine Rohrschlange 4 eingelassen. Dazu ist in der Schaumplatte 1 eine Einformung 2 als Nut vorgesehen, welche den Verlauf der Rohrschlange 4 wiederspiegelt. Die Einformung ist im Ausführungsbeispiel gefräst. Dabei wird ein Formfräser verwendet, der dem Querschnitt der Einformung 2 nachgebildet ist und dem Verlauf der Einformung nachgefahren wird. Im Ausführungsbeispiel wird der Fräser von einer computergesteuerten Fräsmaschine bewegt. In die Steuerung der Fräsmaschine kann der Verlauf der Einformung 2 eingespeichert werden, so daß gleiche Schaumplatten nach gleicher Positionierung mit genau gleichen Einformungen versehen werden. Anstelle des Fräsers können auch Sägen zur Herstellung der Einformung verwendet werden, das gilt besonders für V-förmige Einformungen. Anstelle des Fräsers und der Sägen können auch andere spanabhebenden Werkzeuge verwendet werden.

Es können auch thermische Verfahren zur Herstellung der Einformung verwendet werden. Dazu gehört das Heizdrahtschneiden. Beim Heizdrahtschneiden wird ein Stahldraht mit durchfließendem Strom so stark erhitzt, daß der mit dem Draht berührte Kunststoffschaum schmilzt. Die Heizdrahttemperatur liegt über der Schmelztemperatur. Die Schmelztemperatur von Polystyrolschaum liegt je nach Beschaffenheit bei 60 bis 100 Grad Celsius. Vorzugsweise liegt die Heizdrahttemperatur mindestens 10% über der Schmelztemperatur, noch weiter bevorzugt mindestens 20% über der Schmelztemperatur. Die jeweils vom Heizdraht berührten Schaumzellen kollabieren schlagartig, so daß der Heizdraht langsam durch den Kunststoffschaum bewegt werden kann. Dabei ist günstig, daß aufgrund der schlechten Wärmeleitfähigkeit von Kunststoff die benachbarten Schaumzellen nicht oder nur vernachlässigbar beschädigt werden.

Die Einformungen können auch unmittelbar mit der Plattenherstellung entstehen, indem die Schaumplatte in einer Form durch oben beschriebenes Verschweißen eingefüllter Schaumpartikel erzeugt oder indem die Schaumplatte durch Einspritzen von Schmelze in die Form erzeugt wird.

Die Einformung 2 ist so gewählt, daß das Rohr 4 im Grunde der Einformung schließend aufliegt und mit dem oberen Ende drei Millimeter unterhalb der Schaumplattenoberfläche endet.

Der über dem Rohr 4 bis zur Schaumplattenoberfläche bestehende Hohlraum 5 ist mit Mörtel gefüllt. Darüber hinaus ist die Schaumplatte beiderseits mit einer Mörtelschicht 3 versehen. Die Mörtelschicht 3 hat eine Dicke von 1,5 mm und schließt ein Gittergewebe aus Glasfasern als Armierung ein. Das Gittergewebe hat eine Dicke von 0,8mm. Das Gittergewebe besteht im Ausführungsbeispiel aus Fäden, welche in Längsrichtung der Schaumplatte 1 verlaufen, und aus quer zur Längsrichtung verlaufenden Fäden. In anderen Ausführungsbeispielen ist ein anderes Armierungsgewebe vorgesehen.

Die armierte Mörtelschicht 3 und der Mörtel im Hohlraum 5 bewirken eine beidseitige Einspannung der Schaumplatte 1 und eine feste Gesamtkonstruktion, welche nicht zum Schüsseln neigt.

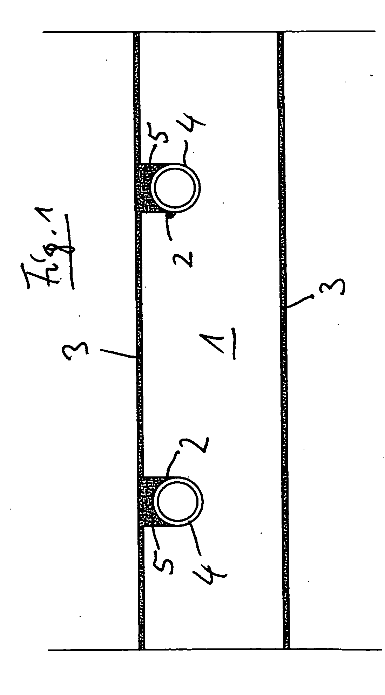

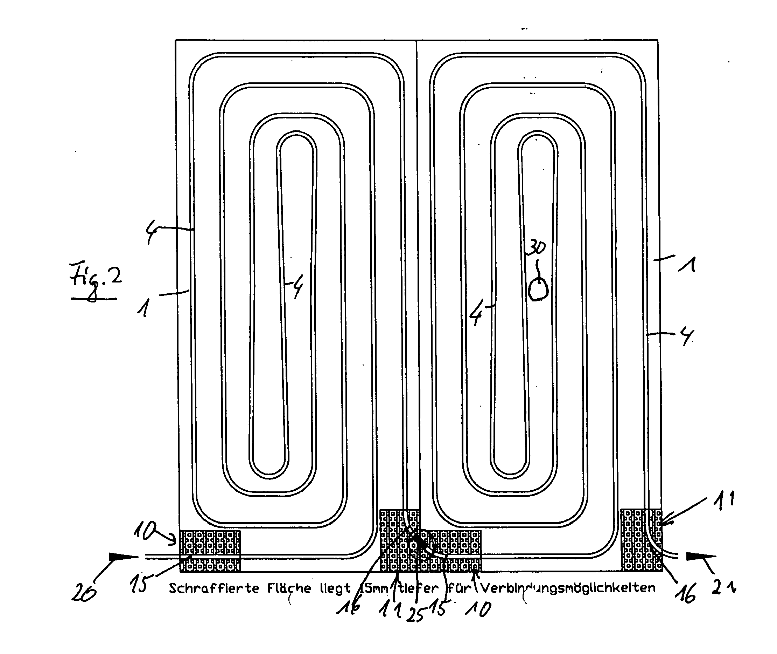

Fig. 2 zeigt zwei nebeneinander liegende Schaumplatten 1 als Duschboden.

Zur Verdeutlichung des Verlaufes der Rohre 4 ist der Verlauf in Fig. 2 ohne die über den Rohren 4 liegende Mörtelschicht dargestellt. Dabei ist ersichtlich, daß der Verlauf der Rohre einen ersten spiralförmigen Verlauf von einer Plattenecke bis zur Plattenmitte zeigt, um danach in einem zweiten spiralförmigen Verlauf gegenläufig zur Ecke 11 zu verlaufen. Das Rohr des zweiten spiralförmigen Verlauf liegt zwischen den Rohren des ersten spiralförmigen Verlaufes.

In anderen Ausführungsbeispielen ist anstelle des spiralförmigen Verlaufes ein hin- und hergehend mäandernder Rohrverlauf vorgesehen.

Fig. 2 zeigt einen Wasserablauf 30 in Form einer Bohrung in der Kunststoffschaumplatte.

Nach Fig. 2 besitzt jede Kunststoffschaumplatte mit Heizschlange einen Rohrschlangenanfang 15 und ein Rohrschlangenende 16.

Nach Fig. 2 ist das Rohrschlangende der in der Ansicht linken Platte mit dem Rohrschlangenanfang 15 der in der Ansicht rechten Platte verbunden. Dadurch sind beide Platten und Heizschlangen in Reihe geschaltet.

Der Rohrschlangenanfang 15 der in der Ansicht linken Platte ist in nicht dargestellter Form mit dem Vorlauf eines Heizkreises verbunden. Der Vorlauf ist schematisch dargestellt und mit 20 bezeichnet.

Das Rohrschlangende 16 des in der Ansicht rechten Heizungsmoduls ist mit dem Rücklauf des Heizkreises der Heizung verbunden. Der Rücklauf ist schematisch dargestellt und mit 21 bezeichnet.

Das Rohrschlangenende 16 der in der Ansicht linken Platte ist mit Rohrschlangenanfang 15 der in der Ansicht rechten Platte über eine Quetschmuffe verbunden. Im Ausführungsbeispiel besteht die Quetschmuffe aus einem Rohrstück, welches einen Innendurchmesser aufweist, der geringfügig größer als der Außendurchmesser des Rohres der Rohrschlange ist, so daß sich die Muffe leicht über das Rohrschlangenende 16 der in der Ansicht linken Platte und den Rohrschlangenanfang 15 der in der Ansicht rechten Platte schieben läßt. Bei einem Rohrdurchmesser von 10mm ist beträgt das Bewegungsspiel zwischen Muffe und Rohr 0,2 mm.

Die Muffe besteht wie das Rohr aus Kupfer.

Die Muffe wird zur Herstellung einer dichten Verbindung mit dem Rohr mittels einer Zange gequetscht. Die Zange besitzt einen Anschlag, der eine weitere Zangenbewegung verhindert, wenn die bleibende Verformung der Muffe bereits eine ausreichende Einspannung des Rohres bewirkt hat.

In anderen Ausführungsbeispielen sind die Rohrenden und der Rohranfang mit ringförmigen Verdickungen versehen, zwischen denen die Muffe verformt wird, so daß ein labyrinthartiger Dichtungsverlauf zwischen Rohr und Muffe entsteht. Das verstärkt die Abdichtung. Dabei kann die Labyrinthwirkung noch dadurch weiter verstärkt werden, daß auch die Muffe mit Ringen versehen sind, die innen angeordnet sind und zwischen den Ringen auf den Rohrenden auf das Rohr drücken.

In noch weiteren Ausführungsbeispielen ist ein Kunststoffschlauch als Heizschlange vorgesehen. Dabei ist der Verformungswiderstand der Schlauchleitung je nach Beschaffenheit zu gering, um dem Muffendruck Stand zu halten. Der notwendige Widerstand wird aufgebaut, indem in den Schlauchenden eine metallische Hülse eingesetzt wird. Die Hülse ist an beiden Enden konisch ausgebildet, so daß sich der Außendurchmesser der Hülse zu den Enden hin verringert und die Hülse sich leichter in die Schlauchleitungsenden schieben läßt. Von Vorteil für die Positionierung der Hülse in den Schlauchenden ist auch ein Bund auf halber Länge der Hülse.

Im Ausführungsbeispiel ist nur eine Duschbodenheizung dargestellt.

In anderen Ausführungsbeispielen ist die Duschbodenheizung mit einer Heizung kombiniert.

Die Heizungen sind über eine gemeinsame Verteilereinrichtung an den Vorlauf des Heizkreises angeschlossen.

Die Verteilereinrichtung besteht im Ausführungsbeispiel aus einem nicht dargestellten rohrförmigen Behälter, in den Warmwasser in axialer Richtung einströmt. Der Behälter besitzt eine Vielzahl von Abzweigungen in Form von Rohranschlüssen. An jedem Anschluß ist ein Ventil vorgesehen, mit dem der Warmwasserdurchtritt eingestellt werden kann. Durch die Einstellung des Warmwasserdurchtritts wird das Warmwasser zwischen den verschiedenen Verbrauchern/Heizungen verteilt. Die Ventile werden im Ausführungsbeispiel manuell verstellt. In anderen Ausführungsbeispielen werden die Ventile elektromotorisch verstellt. Das erleichtert eine elektronische Regelung.

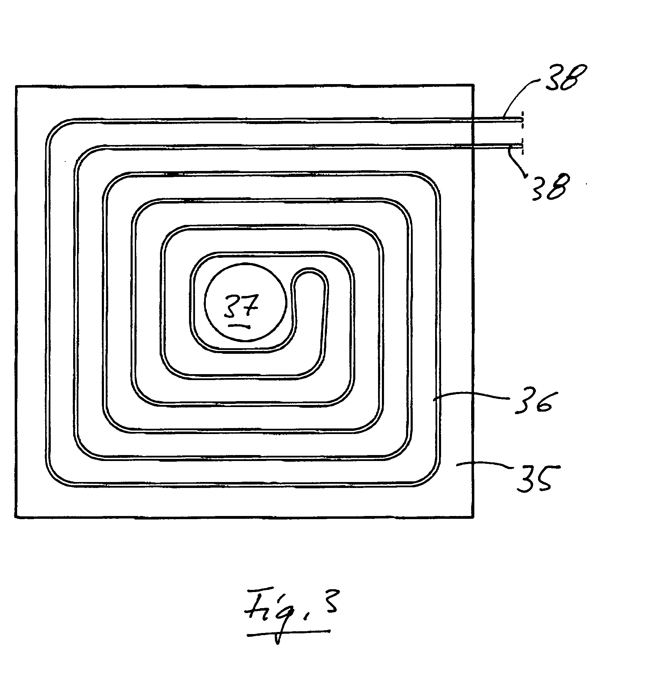

Fig. 3 zeigt ein Ausführungsbeispiel, das sich von dem Ausführungsbeispiel nach Fig. 2 durch das Format des Duschbodens 35 und den Abstand unterscheidet, den die Windungen des spiralförmig verlegten Heizrohres 36 voneinander aufweisen. Der Abstand ist gegenüber dem Ausführungsbeispiel nach Fig. 2 geringer. Das Format ist quadratisch im Unterschied zur Rechteckform der Ausführung nach Fig. 2.

Das Heizrohr 36 ist wie in Fig. 2 in einer Doppelwindung spiralförmig um den Wasserablauf 37 verlegt. Während der Wasserablauf 30 nach Fig. 2 zwischen den beiden Rohrsträngen einer Windung verlegt ist, winden sich beide Rohrstränge nach Fig. 3 um den Wasserablauf 37 herum.

Außerdem sind die Enden 38 des in Dioppelwindung verlegten Heizrohres aus dem Duschboden 35 herausgeführt. An den Enden findet eine nicht dargestellte Verbindung mit einer Vorlaufleitung bzw. mit einer Rücklaufleitung statt.

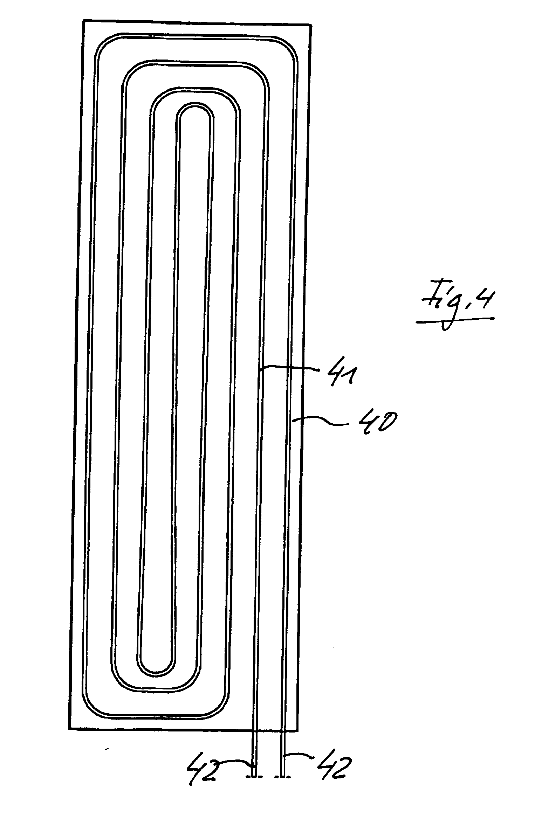

Fig. 4 zeigt einen Duschboden 40 ohne Wasserablauf, der wie in Fig. 2 mit einem weiteren Duschboden kombiniert wird, der einen Wasserablauf besitzt. Auch der Duschboden 40 besitzt eine in Doppelwindung spiralförmig verlegte Rohrleitung. Allerdings sind die Rohrenden 38 wie in Fig.3 aus dem Duschboden herausgeführt.

## Patentansprüche

1. Duschbodenheizung mit einem Ablauf oder einer Ablaufrinne
**gekennzeichnet durch**
a)eine Kunststoffschaumplatte
b)eine mit flüssigem Heizmittel durchströmten Heizschlange/Spirale aus Rohr oder Schlauch
c)wobei die Heizschlange/Spirale in einer Einformung der Kunststoffschaumplatte versenkt ist
d)wobei die schlangenförmig verlegten Windungen einer Heizschlange im Bereich eines Ablaufes oder einer Ablaufrinne einen solchen Abstand voneinander aufweisen, daß sie den Ablauf oder die Ablaufrinne zwischen sich einschließen können,
e)oder wobei die spiralförmig verlegten Windungen einer Heizspirale im Bereich eines Ablaufes oder einer Ablaufrinne einen solchen Abstand voneinander aufweisen, daß sie um den Ablauf oder die Ablaufrinne herum geführt werden können,
f)oder der Ablauf oder die Ablaufrinne seitlich oder vor oder hinter dem Bereich angeordnet sind, in dem die Windungen der Heizschlange/Spirale verlaufen, g)und daß die Kunststoffschaumplatte an der Seite, an der sich die Einformungen befinden, mit einer die Einformungen überbrückenden, armierten Mörtelschicht versehen sind
h)und daß auch an der gegenüberliegenden Plattenseite eine armierte Mörtelschicht vorgesehen ist.

2. Vorrichtung nach Anspruch 1, **dadurch gekennzeichnet, daß** die Heizschlange in der Einformung der Platte Abstand von der überbrückenden, armierten Mörtelschicht besitzt und daß der dadurch bestehende Raum oberhalb der Heizschlange bis zur überbrückenden, armierten Mörtelschicht mit Mörtel verfüllt ist.

3. Vorrichtung nach Anspruch 2, **dadurch gekennzeichnet, daß** der Abstand mindestens 1mm, vorzugsweise mindestens 2mm und noch weiter bevorzugt mindestens 3mm ist.

4. Vorrichtung nach einem der Ansprüche 1 bis 3, **dadurch gekennzeichnet, daß** die Heizschlange in der Einformung am Umfang des zugehörigen Rohres oder Schlauchs mindestens hälftig, vorzugsweise mindestens auf ¾ der Umfangsfläche und noch weiter bevorzugt am gesamten Umfang von Mörtel umgeben ist.

5. Vorrichtung nach einem der Ansprüche 1 bis 4, **gekennzeichnet durch** eine im Querschnitt U-förmige oder V-förmige Einformung.

6. Vorrichtung nach einem der Ansprüche 1 bis 5, **gekennzeichnet durch** einen Mörtel mit einem mineralischen Bestandteil und einem anderen Bestandteil der **durch** einen Kunststoffkleber gebildet wird.

7. Vorrichtung nach einem der Ansprüche 1 bis 6, **dadurch gekennzeichnet, daß** der Schlauch oder das Rohr der Heizschlange ein Anschlußstück, insbesondere zur Verbindung mit anderen Heizschlangen und/oder zur Verbindung mit einer Zulaufleitung und/oder zur Verbindung mit einer Ablaufleitung und/oder zur Verbindung mit einer Heizmittelverteilung und/oder zur Verbindung mit einem Heizgerät, aufweist.

8. Vorrichtung nach Anspruch 7, **dadurch gekennzeichnet, daß** das Anschlußstück durch ein vorragendes Rohrstück oder Schlauchstück gebildet wird, wobei das Rohrstück oder Schlauchstück vorzugsweise eine Länge von mindestens 5cm, vorzugsweise mindestens 15cm, noch weiter bevorzugt mindestens 25cm und höchst bevorzugt mindestens 35cm aufweist.

9. Vorrichtung nach einem der Ansprüche 1 bis 7, **dadurch gekennzeichnet, daß** die Anschlüsse der Heizschlange in der Kunststoffschaumplatte versenkt sind, so daß die Platten schließend aneinander gelegt werden können.

10. Vorrichtung nach Anspruch 9, **dadurch gekennzeichnet, daß** im Bereich der Anschlüsse Ausnehmung an den Kunststoffschaumplatten für die Anschlüsse vorgesehen sind.

11. Vorrichtung nach Anspruch 10, **dadurch gekennzeichnet, daß** die Dicke der Kunststoffschaumplatten im Bereich der Anschlüsse so reduziert sind, daß das Anfang der Heizschlange und das Ende der Heizschlange für den Anschluß frei liegen.

12. Vorrichtung nach einem der Ansprüche 9 bis 11, **dadurch gekennzeichnet, daß** die Ausnehmungen für die Anschlüsse an den Ecken der Kunststoffschaumplatte vorgesehen sind.

13. Vorrichtung nach einem der Ansprüche 9 bis 12, **dadurch gekennzeichnet, daß** zum Anschluß Muffen verwendet werden, welche in die Ausnehmungen der Platten greifen und eine dichte Verbindung mit dem Heizschlangenanfang und/oder dem Heizschlangenende eingehen.

14. Vorrichtung nach einem der Ansprüche 1 bis 11, **gekennzeichnet durch** die Verwendung von Quetschmuffen für den Anschluß der Heizschlangen.

15. Vorrichtung nach einem der Ansprüche 1 bis 14, **gekennzeichnet durch** eine Dicke der Kunststoffschaumplatte von mindestens 20mm, vorzugsweise von mindestens 30mm.

16. Vorrichtung nach einem der Ansprüche 1 bis 15, **dadurch gekennzeichnet, daß** die Rohre und Schläuche der Heizschlange einen Durchmesser aufweisen, der kleiner oder gleich 90% vom Dickenmaß der Kunststoffschaumplatten, vorzugsweise kleiner oder gleich 80% und noch weiter bevorzugt kleiner oder gleich 70% vom Dickenmaß der Kunststoffschaumplatte ist.

17. Vorrichtung nach einem der Ansprüche 1 bis 16, **gekennzeichnet durch** Schaumplatten mit einer Mörtelbeschichtung, wobei die Mörtelschicht eine Dicke von kleiner oder gleich 3mm, vorzugsweise kleiner oder gleich 2mm, noch weiter bevorzugt kleiner oder gleich 1,5mm.

18. Vorrichtung nach einem der Ansprüche 1 bis 17, **gekennzeichnet durch** Schaumplatten mit einer Mörtelbeschichtung und **durch** ein Gittergewebe aus Glasfaser zur Armierung der Mörtelschicht, wobei die einen Fäden in Plattenlängsrichtung verlaufen und die anderen Fäden quer zur Plattenlängsrichtung verlaufen.

19. Vorrichtung nach einem der Ansprüche 1 bis 18, **gekennzeichnet durch** Schaumplatten mit einer Mörtelbeschichtung und **durch** Verwendung eines Mörtels, der einen mineralischen Bestandteil und einen Kunststoffkleberbestandteil aufweist.

20. Vorrichtung nach Anspruch 19, **gekennzeichnet durch** die Verwendung eines Dispersionsklebers für den Kunststoffkleberanteil, wobei Anteil von Dispersionspulver in der Mischung 1 bis 10Gew%, vorzugsweise 3 bis 5 Gew% beträgt.

21. Vorrichtung nach einem der Ansprüche 1 bis 20, **gekennzeichnet durch** Kunststoffschaumplatten mit den Formaten von 400mm bis 3000mm, vorzugsweise mit den Formaten
600 mm x 1000 mm
600 mm x 1200 mm
600 mm x 1300 mm
600 mm x 2000 mm
600 mm x 2600 mm
